# DEMANDE DE BREVET EUROPEEN

(11) **EP 0 856 426 A1**
(43) Date de publication de la demande: **05.08.1998**
(21) Numéro de dépôt: 98400231.1
(22) Date de dépôt: 04.02.1998
(51) Int. Cl.: B60J 10/00, B60R 13/06

(54) **Joint d'étanchéité pour véhicules automobiles**

(30) Priorité: 04.02.1997 FR 9701205
(71) Demandeur: STANDARD PRODUCTS INDUSTRIEL, F-95871 Bezons (FR)
(72) Inventeur: Mesnel, Gérard, 78420 Carrieres Sur Seine (FR); Cholot, Robert, 27480 Fleury La Foret (FR)
(74) Mandataire: Busnel, Jean-Benoît

(57) **Abrégé**

L'invention concerne un joint d'étanchéité pour véhicules automobiles du type comprenant, d'une part, un élément de fixation (2) avec deux branches (2a, 2b) définissant une pince et, d'autre part, un élément d'étanchéité (1),
caractérisé en ce que l'élément de fixation (2) comporte une armature (A) à effet ressort de section transversale triangulaire à l'état libre, permettant d'assurer un rappel automatique des branches (2a, 2b) en position de fermeture sur la feuillure (F), et au moins, un coussinet (3) élastiquement déformable solidaire de l'une des faces internes desdites branches (2a,2b) et destiné à venir en appui latéral contre ladite feuillure (F), et en ce que ledit coussinet (3) a une portion d'extrémité (30) qui s'étend à l'extérieur de l'élément de fixation (2) en U et qui forme entretoise entre ladite branche (2a,2b) et ladite feuillure (F).

## Description

La présente invention concerne un joint d'étanchéité pour véhicules automobiles ainsi qu'un procédé de montage dudit joint sur une feuillure de carrosserie d'épaisseur éventuellement variable.

Il existe déjà de nombreux joints du type comprenant, d'une part, un élément de fixation avec deux branches définissant une pince de section sensiblement en U et, d'autre part, un élément d'étanchéité.

Cependant, dans de tels joints, l'élément de fixation a une géométrie uniforme qui n'est donc pas adaptée au montage sur des feuillures dont l'épaisseur est variable localement ou de façon continue.

Or, tout défaut de montage a des conséquences néfastes sur la tenue du joint et, par voie de conséquence, sur l'étanchéité de la zone à protéger.

La présente invention a pour but de résoudre ces problèmes techniques de manière satisfaisante.

Ce but est atteint, conformément à l'invention au moyen d'un joint d'étanchéité pour véhicules automobiles du type comprenant, d'une part, un élément de fixation avec deux branches définissant une pince et, d'autre part, un élément d'étanchéité,
caractérisé en ce que l'élément de fixation comporte une armature à effet ressort de section transversale triangulaire à l'état libre, permettant d'assurer un rappel automatique des branches en position de fermeture sur la feuillure, et au moins, un coussinet élastiquement déformable solidaire de l'une des faces internes desdites branches et destiné à venir en appui latéral contre ladite feuillure, et en ce que ledit coussinet a une portion d'extrémité qui s'étend à l'extérieur de l'élément de fixation en U et qui forme entretoise entre ladite branche et ladite feuillure .

Selon un mode de réalisation spécifique, chacune des branches comporte, sur sa face interne, un coussinet.

Selon une autre caractéristique, les coussinets sont coextrudés avec l'élément de fixation.

Selon une autre caractéristique, la raideur de l'armature est telle que la position de fermeture de la pince correspond toujours à des contraintes suffisantes pour assurer un effort d'appui latéral des branches contre les flancs du bord de la feuillure, pour une épaisseur minimale de cette dernière.

Selon encore une autre caractéristique, à l'état libre, la section triangulaire de l'armature est fermée avec un niveau de contraintes positif.

Selon une autre caractéristique avantageuse, la position de fermeture de la pince correspond à un écrasement au moins partiel des coussinets afin d'augmenter leurs surfaces d'appui sur la feuillure.

Un autre objet de l'invention est un procédé de montage d'un joint d'étanchéité sur une feuillure de carrosserie d'épaisseur éventuellement variable, caractérisé en ce qu'on écarte les branches de l'élément de fixation en forçant l'armature au moyen d'un galet rotatif dont la partie supérieure est engagée entre les coussinets, sa partie inférieure utilisant le bord de la feuillure comme chemin de roulement et de guidage et on chausse ledit élément de fixation sur la feuillure avant que l'armature ne se soit refermée.

L'effet de ressort de l'armature conjugué à la présence des coussinets assure un calage et une fixation ferme du joint sur la feuillure par une bonne tenue de la pince tout en compensant ses éventuels écarts d'épaisseurs.

L'étanchéité à l'air et à l'eau est ainsi renforcée et garantie.

En outre, le montage du joint est considérablement facilité du fait que la phase de fermeture de la pince de fixation sur la feuillure devient automatique.

En effet, la fermeture correspond au retour de la pince vers une position stable où le niveau de contraintes est minimum.

Dans ces conditions, il n'est plus nécessaire lors du montage de pratiquer une fermeture de la pince en ajustant les efforts d'appui sur les branches en fonction de l'épaisseur de la feuillure comme cela est le cas avec les joints traditionnels.

Bien entendu, l'ouverture préalable de la pince avant qu'elle ne vienne chausser la feuillure est forcée mais avec un effort qui peut être, cette fois, constant.

Par suite, l'outil de montage est simplifié.

La présente invention sera mieux comprise à la lecture de la description qui va suivre, accompagnée des dessins sur lesquels :
- la figure 1 représente une vue en coupe transversale d'un mode de réalisation du joint de la présente invention monté sur une feuillure ;
- la figure 2 représente une vue de face du joint de la figure 1 pendant l'opération de montage.

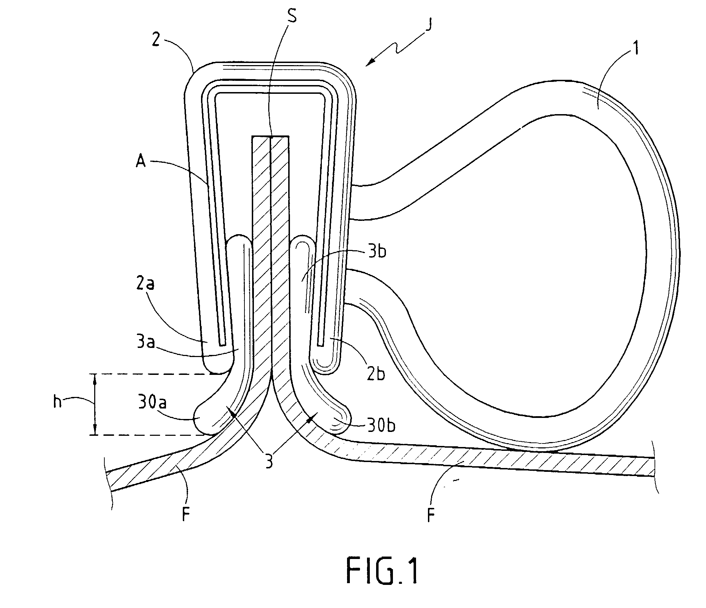

Le joint d'étanchéité J représenté sur la figure 1 est destiné à se chausser sur le bord saillant S d'une feuillure F de carrosserie de véhicule automobile.

Le joint J comprend un élément tubulaire 1 assurant l'étanchéité, par exemple, avec un ouvrant (non représenté) et un élément de fixation 2 avec deux branches 2a, 2b définissant une pince.

L'élément de fixation 2 comporte une armature A au moins partiellement interne destinée à rigidifier la matière élastomère ou plastomère constitutive du joint J.

l'armature A est réalisée sous forme d'une bande de matière plastique ou métallique de section transversale triangulaire fermée lui conférant une mémoire de forme assurant une restitution de la forme initiale qu'elle possède à l'état libre dès que la section triangulaire est ouverte à partir de sa position de repos où le niveau de contraintes est minimum ou nul. Ce niveau de contraintes est, de préférence positif de façon à assurer, après enrobage de l'armature A, un appui mutuel des branches 2a,2b de la pince à l'état libre.

Ainsi, l'armature A qui peut comporter des découpes éventuelles, produit un effet de ressort permettant d'assurer un rappel automatique et élastique des branches 2a,2b en position de fermeture sur la feuillure F.

Dès lors, la raideur de l'armature A est telle que la position de fermeture de la pince correspond toujours à des contraintes suffisantes pour assurer un effort d'appui latéral des branches 2a,2b contre les flancs du bord S de la feuillure F, pour une épaisseur minimale de cette dernière.

L'élément de fixation 2 est équipé, en outre, d'au moins un coussinet 3 élastiquement déformable solidaire de la face interne de l'une des branches 2a, 2b et destiné à venir en contact d'appui contre la feuillure F en l'épousant pour assurer le calage latéral de la pince.

Sur la figure 1, chacune des branches 2a, 2b est pourvue d'un coussinet 3a, 3b élastiquement déformable qui peut, par exemple, être coextrudé avec l'élément de fixation 2. Chaque coussinet 3a, 3b a une portion d'extrémité 30a, 30b qui s'étend à l'extérieur de l'élément de fixation 2, au-delà de l'extrémité des branches 2a, 2b.

Les coussinets 3a,3b s'étendent également à l'intérieur de la pince 2 le long et au contact du bord S de la feuillure F.

La matière constitutive des coussinets 3a,3b est généralement plus souple que celle de la pince de façon à compenser les changements de géométrie et en particulier les écarts d'épaisseurs de la feuillure F.

Par ailleurs, les contraintes internes de l'armature A ont pour effet d'écraser au moins partiellement lesdits coussinets 3a, 3b sur la feuillure F et d'augmenter ainsi leurs surfaces d'appui et, par voie de conséquence, l'efficacité du calage latéral de la pince.

Les portions d'extrémité 30a,30b assurent également un calage vertical de la pince en formant entretoise et en offrant une face supérieure de butée pour l'extrémité inférieure des branches 2a, 2b qui sont alors maintenues à une hauteur déterminée h sur la feuillure F.

Or, la hauteur h de la pince 2 par rapport à la feuillure F correspond à une position correcte de fonctionnement de l'élément tubulaire 1 d'étanchéité, c'est-à-dire une position dans laquelle cet élément n'est pas déformé par la feuillure F.

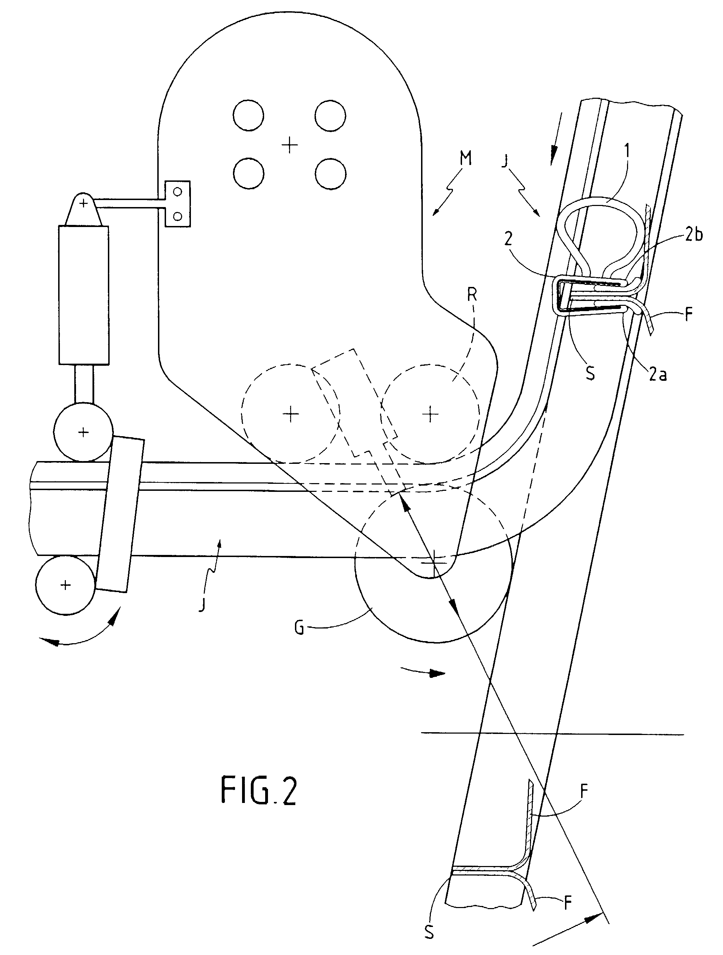

La figure 2 illustre le procédé de montage du joint J de l'invention sur un bord saillant S de la feuillure F.

Le principe de pose consiste à écarter d'abord les branches 2a, 2b de la pince de fixation 2 en forçant l'armature A au moyen d'un galet rotatif G porté par l'outil de montage M et qui est introduit entre lesdites branches.

On chausse ensuite la pince 2 sur le bord S de la feuillure F, avant que l'armature A ne se soit refermée et en exerçant éventuellement un effort d'appui sur le dos de la pince 2. La partie supérieure du galet G est engagée dans la pince 2 entre les coussinets 3a,3b tandis que sa partie inférieure utilise le bord S comme chemin de roulement et de guidage. L'outil de montage M porte, à proximité immédiate du galet G, un rouleau R prenant appui sur le dos de la pince 2.

Le joint J est amené de façon continue dans l'outil M selon une direction sensiblement perpendiculaire à la feuillure F.

## Revendications

1. Joint d'étanchéité pour véhicules automobiles du type comprenant, d'une part, un élément de fixation (2) avec deux branches (2a, 2b) définissant une pince et, d'autre part, un élément d'étanchéité (1),
caractérisé en ce que l'élément de fixation (2) comporte une armature (A) à effet ressort de section transversale triangulaire à l'état libre, permettant d'assurer un rappel automatique des branches (2a, 2b) en position de fermeture sur la feuillure (F), et au moins, un coussinet (3) élastiquement déformable solidaire de l'une des faces internes desdites branches (2a,2b) et destiné à venir en appui latéral contre ladite feuillure (F), et en ce que ledit coussinet (3) a une portion d'extrémité (30) qui s'étend à l'extérieur de l'élément de fixation (2) en U et qui forme entretoise entre ladite branche (2a,2b) et ladite feuillure (F).

2. Joint d'étanchéité selon la revendication 1, caractérisé en ce que chacune des branches (2a, 2b) comporte, sur sa face interne, un coussinet (3a, 3b).

3. Joint d'étanchéité selon la revendication 2, caractérisé en ce que les coussinets (3a,3b) sont coextrudés avec l'élément de fixation (2).

4. Joint d'étanchéité selon l'une quelconque des revendications précédentes, caractérisé en ce que la raideur de l'armature (A) est telle que la position de fermeture de la pince correspond toujours à des contraintes suffisantes pour assurer un effort d'appui latéral des branches (2a,2b) contre les flancs du bord (S) de la feuillure (F), pour une épaisseur minimale de cette dernière.

5. Joint d'étanchéité selon l'une quelconque des revendications précédentes, caractérisé en ce qu'à l'état libre, la section triangulaire de l'armature (A) est fermée avec un niveau de contraintes positif.

6. Joint d'étanchéité selon l'une quelconque des revendications précédentes, caractérisé en ce que la position de fermeture de la pince correspond à un écrasement au moins partiel des coussinets (3a,3b) afin d'augmenter leurs surfaces d'appui sur la feuillure (F).

7. Procédé de montage d'un joint d'étanchéité (J) selon l'une des revendications 1 ou 6, sur une feuillure (F) de carrosserie d'épaisseur éventuellement variable, caractérisé en ce qu'on écarte les branches (2a, 2b) de l'élément de fixation (2) en forçant l'armature (A) au moyen d'un galet rotatif (G) dont la partie supérieure est engagée entre les coussinets (3a,3b), sa partie inférieure utilisant le bord (S) de la feuillure (F) comme chemin de roulement et de guidage et on chausse ledit élément de fixation (2) sur la feuillure (F) avant que l'armature (A) ne se soit refermée.
